(19) Europäisches Patentamt
European Patent Office
Office européen des brevets

(11) **EP 2 304 594 B1**

(12) **EUROPEAN PATENT SPECIFICATION**

(45) Date of publication and mention
of the grant of the patent:
**13.12.2017 Bulletin 2017/50**

(51) Int Cl.:
***G06F 15/80*** (2006.01)

(21) Application number: **09750090.4**

(86) International application number:
**PCT/GB2009/001274**

(22) Date of filing: **20.05.2009**

(87) International publication number:
**WO 2009/141612 (26.11.2009 Gazette 2009/48)**

(54) **IMPROVEMENTS RELATING TO DATA PROCESSING ARCHITECTURE**

VERBESSERUNGEN IN BEZUG AUF DATENVERARBEITUNGSARCHITEKTUR

AMÉLIORATIONS CONCERNANT UNE ARCHITECTURE DE TRAITEMENT DE DONNÉES

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **20.05.2008 GB 0809192**

(43) Date of publication of application:
**06.04.2011 Bulletin 2011/14**

(73) Proprietor: **Telefonaktiebolaget LM Ericsson (publ)**
**164 83 Stockholm (SE)**

(72) Inventors:
• **WHITAKER, Martin**
**Buckinghamshire HP11 2DJ (GB)**
• **LANCASTER, John**
**Buckinghamshire PH11 2DJ (GB)**

(74) Representative: **Ericsson**
**Patent Development**
**Torshamnsgatan 21-23**
**164 80 Stockholm (SE)**

(56) References cited:
**US-A- 5 129 092     US-A- 5 163 120**
**US-A- 5 557 734     US-A- 5 872 988**
**US-A- 6 128 720**

• **NATION W G ET AL: "Efficient masking techniques for large-scale SIMD architectures" FRONTIERS OF MASSIVELY PARALLEL COMPUTATION, 1990. PROCEEDINGS., 3RD S YMPOSIUM ON THE COLLEGE PARK, MD, USA 8-10 OCT. 1990, LOS ALAMITOS, CA, USA,IEEE COMPUT. SOC, US, 8 October 1990 (1990-10-08), pages 259-264, XP010019649 ISBN: 978-0-8186-2053-9**

**Description**

Field of the Invention

The present invention concerns improvements relating to data processing architecture. More specifically, though not exclusively, the present invention is related to non-associative data processor architecture which is configured to enable data searching, i.e. has some associative qualities. This architecture relates to the class of architecture called Single Instruction Multiple Data (SIMD) processors. The main area of application of the present invention's architecture is for video encoding/decoding such as High Definition (HD) encoding and decoding in real time at a relatively low cost, such as would be ideally required for a set top box (STB). An example of a SIMD controller with an associative architecture is provided in our co-pending International Patent Publication No. WO03/054707.

Discussion of Prior Art

Video encoding/decoding is known and PC-based systems have been built to effect such processing. PC systems, according to the prior art, have been sold with accelerator platforms which include video encoder/decoder software. Accelerator platforms have traditionally been used to run the encoder/decoder software. These prior art systems are expensive due to the need for such high-power accelerator platforms. High-specification PCs with multiple processors and multi-threading processing techniques are known, for example, which can also run such software. These high-performance PCs can be cheaper than a PC system with a dedicated accelerator platform. However, PC-based systems have the disadvantage that in use they must devote all of their resources to running such software. This is a problem as most PCs are used to run many different programs and so all of the required resources may not be available. Therefore, there is a need for such software to be run inexpensively on a system in an efficient manner which does not suffer from the above problems.

United States Patent US 5,557,734 describes a parallel processing system for processing data matrices, such as images. The system includes a plurality of processing units, organized in four blocks of eight processing units per processing chip, and external cache burst memory, wherein each processing unit is associated with at least one column of the external memory. A barrel shifter connected between the memory and the processing units allows data to be shifted to adjacent processing chips, thus providing the means for connecting several of the chips into a ring structure. Further, digital delay lines are connected between the barrel shifter and the processing units, thus providing the capability of delaying, via a predetermined number of clock cycles, incoming column data. Each processing unit is provided with a nine bit cache memory. The system further includes a controller for each chip that sequences a burst of consecutive rows of a data matrix from the external cache burst memory, to be stored in either the cache memory associated with each of the processing units or routed directly to the processors included in each processing unit.

United States Patent US 5,163,120 describes a synchronous vector processor device having a plurality of one-bit processor elements organized in a linear array. The processor elements are all controlled in common by a sequencer, a state machine or a control circuit (controller) to enable operation as a parallel processing device. Each processor element includes a set of input registers, two sets of register files, a set of working registers, an arithmetic logic unit including a one-bit full adder/subtractor, and a set of output registers. In video applications each processor element operates on one pixel of a horizontal scan line and is capable of real-time digital processing of video signals. The synchronous vector processor includes interconnecting circuitry enabling the individual processor elements to retrieve data from and transmit data to their first and second nearest neighbors on either side. At the chip level external connections are provided to enable cascading of several synchronous vector processor devices.

United States Patent US 6,128,720 describes a multi-processor array organization that is dynamically configured by the inclusion of a configuration topology field in instructions broadcast to the processors in the array. Each of the processors in the array is capable of performing a customized data selection and storage, instruction execution, and result destination selection, by uniquely interpreting a broadcast instruction by using the identity of the processor executing the instruction. In this manner, processing elements in a large multi-processing array can be dynamically reconfigured and have their operations customized for each processor using broadcast instructions.

Disclosure of the Invention

The present invention is set out in the claims. Independent claim 1 defines a parallel processor and independent claim 13 defines a High Definition Real-Time Video data encoded decoder with reference to claim 1.

The present document is directed to a solution to the above problem which is independent of a PC and the associated resource contention issues and also orders of magnitude cheaper than previous solutions. The present invention is a new data processing architecture which is powerful enough to implement the required HD encoding/decoding algorithms in real time and can be implemented on a dedicated and inexpensive single integrated chip, such that it can be used in a STB.

The new architecture which is suitable for a SIMD parallel processing technique, has at its core a string of processing elements which are grouped into units where all processing elements within a unit are connected directly to all other processing elements within the unit. This enables each processing element to be able to fetch data from another processing element within the same processing unit very quickly within a single clock cycle.

More specifically there is provided a parallel processor comprising: a plurality of processing elements connected in a string and grouped into a plurality of processing units, wherein each processing unit comprises a plurality of processing elements which each have direct interconnections with all of the other processing elements within the respective processing unit, the interconnections enabling data transfer between any two elements within a unit to be effected in a single clock cycle.

This architecture is a compromise which provides, on the one hand improvements in overall parallel processor processing speed, but on the other hand does not increase the number of interconnections required to such a level which takes up too great a silicon chip area thereby negating the benefits of the increased processing speed. For example, in a parallel processor requiring n processing elements (PEs), if all the PEs were interconnected to each other to enable the fetching of data from any other PE in a single clock cycle, then the total number of connections would be n! (n factorial). However, if this was handled by m Processing Units (PUs) each having p PEs where n = m x p, and m<<n and p<n, the number of connections required (including inter PU connections) would be

$$m \times (p!) + (m - 1) = ((n/m)! \times m) + (m - 1)$$

This is considerably smaller than n!, particularly when n gets large for example 4096 PEs.

Taking a far smaller number to illustrate this point, where n = 8 (eight PEs in total), p = 4 (four PEs per PU) and m = 2 (two PUs), the number of connections required for full connectivity without the invention is n! = (8x7x6x5x4x3x2x1 = 40,320). However, using the present invention the number of connections required would be (2x4!)+1 = (2x(4x3x2x1) + (2-1)= 48 +1 = 49).

This above example illustrates the massive reduction in connectivity which can be achieved without any significant loss of performance.

Preferably the number of processing elements in a single PU is sixteen but other numbers, such as 4, 8, 32 may be used.

This connectivity provides the flexibility required to configure the processing unit in different ways by selectably involving different processors for performing different tasks whilst at the same time ensuring a fast (immediate) low-level communication between a string of processors. In this architecture, the advantages of having the processors in a string can be achieved without the conventional disadvantages of having to propagate instructions along the string for inter-processor communications.

The presently described architecture is able to achieve these benefits as it is not designed to be scalable as other prior art architectures have been. Scalability comes at a cost in terms of performance, scalability is sacrificed in order to improve current performance and reduce costs. In this regard, there is provided a dedicated architecture optimised to the specific application of video encoding/decoding.

Preferably each processing element has a unique numerical identity which can be specified within a processing instruction to enable or disable the processing element from participating in the currently executed set of instructions. The advantage of this is that individual processing elements can be made inactive to a current instruction through use of simple processing instructions.

It is also possible for each processing unit to have a unique numerical identity which can be specified within a processing instruction to enable or disable the processing unit from participating in the currently executed set of instructions. The advantage of this is that groups of processing elements can be made inactive to a current instruction through use of simple processing instructions.

Accordingly, each processing element can be operatively selectable under software control via an instruction stream to that processing element, such software control disabling the processing element from taking part in a present concurrent processing operation in use and enabling the same processing element to take part in a following concurrent processing operation.

The processing elements within a processing unit may be connectable to other processing elements by means of a communications multiplexer provided in each processing element. Data shifting is a required element of many key computer operations, from address generation to arithmetic functions. Shifting a single data bit one field at a time can be a slow process. However a communications multiplexer can speed this process up dramatically.

A barrel shifter may be used within the ALU. A Barrel Shifter is a combinational logic device/circuit that can shift or rotate a data word by any number of bits in a single operation.

A barrel shifter works to shift data by incremental stages which avoids extra clocks to the register and reduces the time spent shifting or rotating data (the specified number of bits are moved/ shifted/rotated the desired number of bit positions in a single clock cycle).

The barrel shifter is preferably implemented as a barrel rotator followed by a logical masking operation. This is a very simple and fast way of implementing searching within the processing elements.

Thus, the present invention advantageously combines speed of operation and relatively low cost with a limited ability to search data.

The Processing Element may be configured to implement a Booth's Complement multiplication function from within its ALU. This is advantageous in that the speed of operation is increased as the Booth's Complement function is implemented directly in hardware.

Brief Description of the Drawings

Figure 1 is a schematic block diagram showing the arrangement of processing units within a SIMD processor;

Figure 2 is a schematic block diagram showing the overall arrangement of each processing unit shown in Figure 1, which contains four sub units according to an embodiment of the present invention;

Figure 3 is a schematic block diagram showing the layout of a sub-unit of Figure 2, and illustrating the interconnectivity between processing elements (PEs) within each sub unit;

Figure 4 is a schematic block diagram showing the general functional circuits provided within a Processing Element;

Figure 5 is a logic circuit diagram showing the components and configuration of Figure 4 in detail;

Figure 6 is a schematic block diagram showing the general functional circuits provided within the ALU shown in Figures 4 and 5;

Figure 7 is a logic circuit diagram showing the components of the ALU of Figure 6 in detail;

Figure 8 is a logic table diagram showing the ALU's control logic in detail;

Figure 9 is a logic circuit diagram showing an array of logic gates configured to implement mask generation as part of one stage of a barrel shifter shown in Figure 6 of the first embodiment of the present invention;

Figure 10 is a logic circuit diagram showing an array of logic gates configured to implement mask generation as part of one stage of a barrel shifter shown in Figure 6 of the second embodiment of the present invention; and

Figure 11 is a logic diagram showing an array of logic gates configured to implement a barrel rotator of the barrel shifter of Figure 6, together with a count leading zeros (CLZ) operation.

Detailed Description of the Specific Embodiments

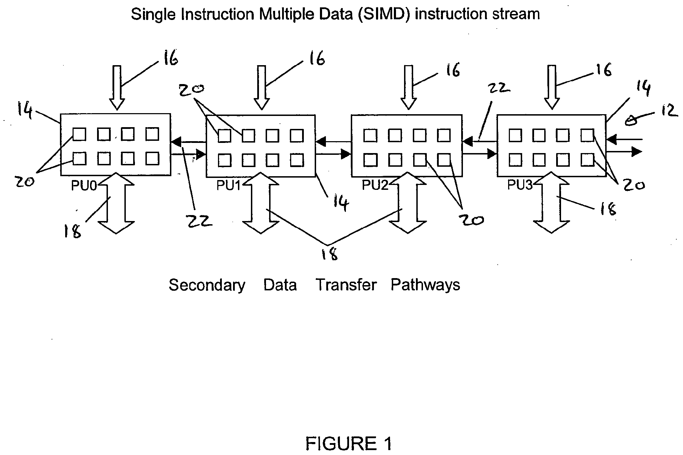

As shown in Figure 1, the present invention is embodied in a parallel processor 10 which comprises a distributed processing layer 12 comprising a plurality of processing units (PUs) 14 connected in a string configuration. The PUs 14 can be grouped and each group can be operated by a common controller (not shown) in a so called 'SIM-SIMD mode' (Single Instruction Multiple - Single Instruction, Multiple Data) (as described in co-pending international patent application claiming priority from UK patent application GB 0809189.4). Accordingly, each PU 14 is supplied with the same instruction stream 16 but works on a different data set retrieved from a secondary shared data store (not shown) via a secondary data transfer pathway 18.

Each PU 14 comprises a plurality of Processing Elements (PEs) 20 which are completely interconnected with each other. The number of PEs 20 in each PU 14 is a design choice, but preferably numbers are in powers of 2 greater than 2, namely 4 PEs, 8 PEs, 16 PEs, 32 PEs, 64 PEs, 128 PEs, etc. Increasing the numbers of PEs 20 in each PU disadvantageously increases the complexity of interconnections within the PU 14 but also advantageously increases potential overall speed of the parallel processor 10. Accordingly, the numbers of PEs 20 within a PU 14 is typically a compromise and is determined by the requirements of a given design. In the current embodiment, 16 PEs 20 are provided within each PU 14.

As mentioned previously, each PU 14 has a numeric identity as do each of the PEs 20 within each PU 14. Identities (PU0, PU1, PU2 etc.) are assigned to the PUs 14 in sequence along the string from 0 on the left as clearly shown in Figure 1. Also the PE's within each PU are also assigned unique identities with each PU 14. The purpose of the PU and PE identities is that each PE 20 is able to be individually addressed and, as will be described in greater detail later, each PE 20 can be individually activated to participate or not participate in a current instruction of the instruction stream 16. The provision of PU identities enables groups of PEs 20 within a given PU 14 to be enabled or disabled for a current instruction.

SIMD operation means that the PEs 20 of all PUs 14 execute the same instruction. In addition, the present configuration has the ability to perform what is termed a 'conditional' operation which means that only a currently activated sub-set of all of the PEs 20 execute the current instruction. This ability to conditionally include or exclude different PEs 20 in a current parallel processing instruction supports the earlier mentioned use of the current architecture within processor which can operate in a so called 'SIM-SIMD mode'. When used in this mode, other sub-sets of PEs 20 may execute a different instruction provided by a different controller (not shown).

The inter-processor communications networks 22 of adjacent PUs 14 is connected giving a logical network connecting the PEs 20 of all PUs 14, but not in a fully connected mesh. Thus the network is segmented to isolate each PU 14. The set of currently active PEs 20 is the intersection of the global set of all enabled PEs 20 and the set of PEs 20 specified explicitly within each instruction (of the common instruction stream 16). This active set changes under software control as different instructions of the instruction stream 16 are processed.

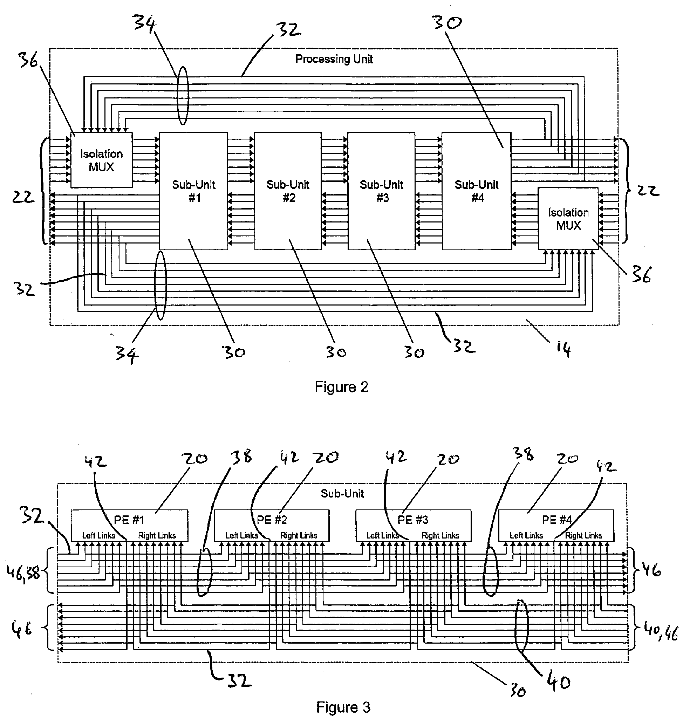

Figure 2 shows a processing unit (PU) 14 (also referred to as a 'QED PU') in greater detail according to an embodiment of the present invention. The PU 14 can be considered to be a Single Instruction, Multiple Data (SIMD) processor which comprises four sub-units 30, each sub-unit 30 comprising four processing elements (PEs) 20. The sub-unit 30 has no functional significance; it is simply a hierarchical block used in the block diagram of Figure 2 to enable easier understanding of the structure of the PU 14.

Therefore, a QED PU 14 in the present embodiment consists of a set of sixteen 16-bit PEs 20 organised in a string topology, operating in conditional SIMD mode with a fully connected mesh network 22 for inter-processor communication. A fully connected mesh network simply means that each PE is directly connected to all other PEs 20 within the same PU. Also the fully connected mesh network allows all PEs to concurrently fetch data from any other PE. Each PE 20 within each PU 14 has a unique numeric identity. These identities are assigned in sequence along the string from PE#0 on the left to PE#15 on the right.

The data paths (each of the individual connection lines 32) in Figures 2 and 3 are all 16 bit data paths. Also each of the PEs 20 is connected directly to all other PEs 20 within the same PU 14. This means that data transfers between any two selected PEs 20 can advantageously occur in a single clock cycle. The PEs 20 are connected in a string configuration as has been mentioned before. In order to enable direct connection between PEs 20 at the extreme ends of the string configuration namely PE#1 and PE#15, two looping feedback paths 34 are provided in order to connect the PEs 20 at the two ends of the string.

SIMD operation means that all the PEs 20 execute the same instruction but on multiple data. Conditional SIMD operation means that only the currently activated sub-set of PEs 20 execute the current instruction on multiple data. The present PU 14 enables both of these types of control techniques to be used.

When the PU 14 is configured as an isolated unit, each PE 20 can fetch data from any other PE 20 in the same PU 14 in a single clock cycle. When configured as part of a string, each PE 20 can fetch data from any one of its seven left neighbours or eight right neighbours in a single clock cycle.

A PE 20 can also alternatively obtain data from any other PE in the string by staging the fetched data through intermediate PEs 20. This is non-preferable as it takes multiple clock cycles and requires all PEs 20 to act in concert, though is possible. Also obtaining data from outside the current PU 14 is also possible but likewise this takes more than one clock cycle as the data is obtained by a staged fetch operation via other PEs 20. This is described in greater details later.

Two isolation MUXs (multipliers) 36 are provided for each PU 14. These act as a software controlled switches which are used to connect the PUs 14 in or out of a chain of such PUs 14. Accordingly, the size of the group of PUs 14 to be used can be set, as desired, in software. Also the isolation MUXs 36 provide a buffer for communications between different PUs 14.

In addition, given the enhanced connectivity of PEs 20 within each PU 14, the PEs in each PU 14 can be readily configured (actively connected) to work as a summing tree (not explicitly shown) enabling sum operations to be performed in a distributed manner over several PEs 20 within each PU 14. The results can also be fed back into a given PE to be stored and processed.

Figure 3 shows a more detailed view of a sub-unit 30 shown in Figure 2. Here the detail of the actual connections between different PEs 20 are shown. Each PE 20 has seven left links 38 and eight right links 40 and one central link 42 which together comprise the PE connections 44. The inter PE connections 44 are provided in such a manner that when the sub units 30 are connected together via the end connections 46 of the inter PE connections 44, the direct connection between each different PE 20 is evident. This enables the inter-processor communication between any two PEs 20 within a PU 14 to be achieved in a single machine clock cycle whilst still maintaining the desired arrangement of the PEs 20 in a string (advantageously to allow configuration as a string processor).

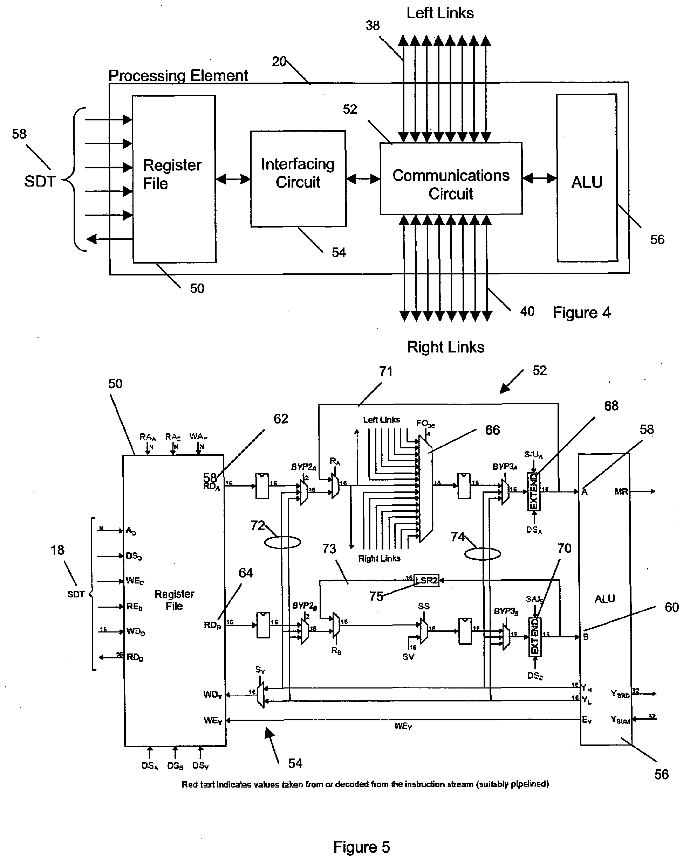

Referring now to Figure 4, the general structure of a PE 20 comprises a Register File 50 comprising a set of registers, to which the Secondary Data Transfer Pathway 18 connects. The Register File 50 is connected to a communications circuit 52 via an interface circuit 54. The interface circuit 54 provides the first stage in a data pipeline of the PE 20. The communications circuit 52 forms the second stage of the pipeline and an ALU (Arithmetic Logic Unit) 56 (described later) coupled to the communications circuit 52 provides the third stage of the pipeline.

The communications circuit 52 supports the connections of the PE 20 to adjacent PEs 20 such that data can be shared and moved easily between PEs 20, particularly within the same PU 14. The primary function of the communications circuit is to fetch data (typically operands) for use in the executing the current instruction. In a direct fetch mode of operation this can be done in a single clock cycle for PEs 20 within the same PU 14. In an indirect fetch mode of operation, the communications circuit 52 can obtain data which is not in the same PU 14, by multiple shifts of the required data from the distant location to the current PE 20. However, this indirect mode fetch mode using the communications circuit 52 takes multiple clock cycles.

The above direct and indirect modes of operation of the communications circuit 52 are in contrast to previous architectures, which have required a dedicated router (see for example WO 03/054707). Thus, the communications circuit 52 is arranged to perform the function of a long-distance communications multiplexer 66 (described in Figure 5), which has both the left links 38 and the right links 40 as direct data input/output pathways for the PE 20.

When the communications circuit 52 is determining where to fetch data from a Fetch Map (not shown) may be used. A Fetch Map is a non-regular fetch distance (offset) of PEs required to obtain desired data, typically an operand. The fetch map is typically computed and sent to the PE for using in implementing the instruction execution (namely operand fetching).

All active PEs 20 may fetch data over a common distance or each active PE 20 may locally compute the fetch distance and fetch the operand from an irregular mapping (the abovementioned 'Fetch Map').

The Fetch Map variable defines and initialises a one-dimensional array containing one element for each PE 20. Each element contains the relative fetch offset to be used by the corresponding PE 20. If the values in the fetch map are the same then this equates to a regular fetch communication instruction. However, if the offsets are different then the communications of the different PEs are irregular fetch communication instructions. The fetch map determines in a simple way a host of irregular operand fetch instructions for the communications circuit 52.

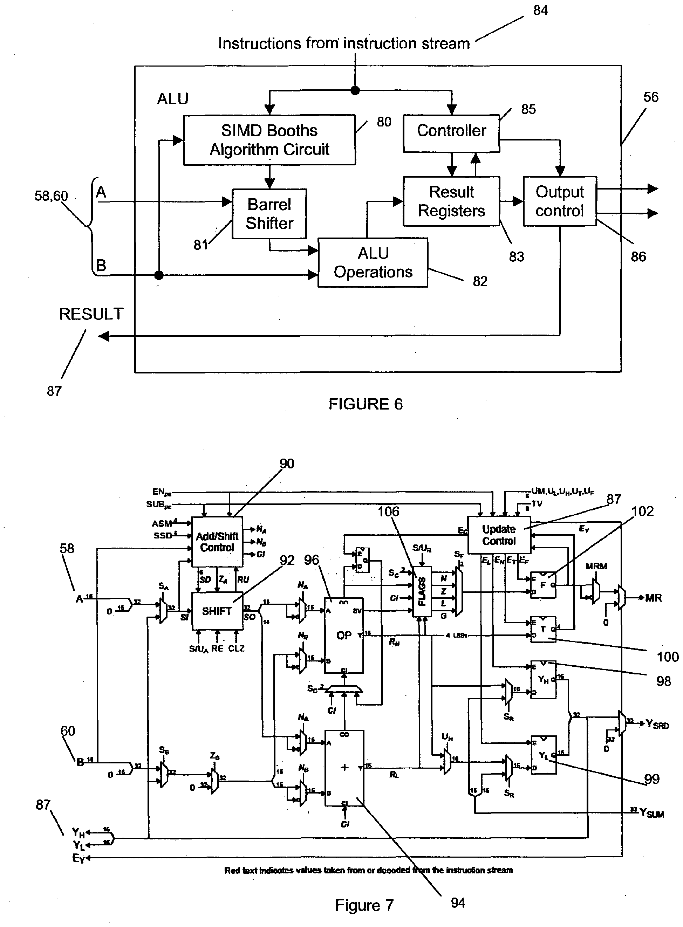

The ALU 56 of the PE 20 performs the majority of the arithmetic and logical operations of the PE 20 and is described in greater detail with reference to Figures 6 and 7. Whilst not shown in Figure 4, the ALU 56 can also communicate directly with the interface circuit 54 to receive and store data from the Register File 50.

Figure 5 shows the PE of Figure 4 in greater detail. As can be seen from Figure 5, each PE 20 has two data paths for data variables A and B 58, 60 which are provided to the ALU 56. These variables 58, 60 originate from the Register File 50 as outputs $RD_A$ 62 and $RD_B$ 64. The data variables A and B 58, 60 are the two variables on which the ALU 56 performs the logical operation specified by the current instruction of the instruction stream 16.

The Register File 50 provides a primary data store (see WO 03/054707 for definition) for the PE 20, and accesses external data via the connected Secondary Data Transfer (SDT) pathway 18. This is composed of receiving signals for the address of the Data $(A_D)$ the Data Size $(DS_D)$, Write Enable $(WE_D)$, Read Enable, $(RE_D)$ and Read Data $(RD_D)$.

The PE 20 is aware of the operand type (i.e. signed or unsigned). The operation and the sign extension are determined from the current instruction of the instruction stream 16. For most instructions, the PE 20 will perform a signed operation if both operands are signed, otherwise it will perform an unsigned operation. For multiplication instructions, it will perform a signed operation if either operand is signed, otherwise it will perform an unsigned operation.

When 8-bit data is fetched from a data register of the Register File 50, it is sign extended by the sign extenders 68 and 70 which are provide respectively for operands A and B 58, 60, according to operand type (i.e. signed or unsigned $S/U_A$ and $S/U_B$), to a 16-bit value.

As has been mentioned previously, the PE 20 has a pipelined architecture that overlaps fetch (including remote fetch), calculation and store operation. Each PE 20 has bypass paths $BYP2_A$, $BYP3_A$ $BYP2_B$, $BYP3_B$ allowing a result output from the ALU 56 to be used in the next instruction before it has been stored in the Register File 50. The stage of the pipeline in which the bypass path is used is identified in the name of the bypass path. If the result originates in a remote PE 20 of the same PU 14, the bypass paths can still be used to use that result in the local PE 20 by way of the direct links 38, 40 between the remote and local PEs 20. This is only possible because of the fact that each PE 20 of a PU 14 is tightly coupled to other PEs 20 of the same PU14.

For the avoidance of any doubt the following values with their meanings are taken from or decoded from the instruction stream 16:

$RA_A$ = Read address for operand A
$RA_B$ = Read address for operand B
$WA_Y$ = Write address for Answer (Result) Y
$R_A$ = Recirculate Operand A (this value has significance for multistage operand fetch)
$R_B$ = Recirculate Operand B (this value has significance for supporting a Booth's algorithm function in the ALU - described later)
$DS_A$ = Data Size for Operand A
$DS_B$ = Data Size for Operand B
$DS_Y$ = Data Size for Result Y
$S_Y$ = Select Result Y (operation high bytes or low bytes)
$S/U_A$ = Signed / Unsigned value for Operand A
$S/U_B$ = Signed / Unsigned value for Operand B
SV = Scalar Value (this is a 16 bit value to be added to all operands in every active PE)
SS = Select Scalar (use local or select scalar value)
$FO_{pe}$ = Fetch Offset (controls barrel shifter locally and can be different for each PE) Here the bypass functions which utilise feedback connections 72 and 74 for the different stages of the pipelines for both A and B operands between the Register File 50 and the ALU 56, work under the following conditions:

$BYP2_X$= (if $BYP2_x.WE_Y$) then $S_Y$, else $S2_x$ and
$BYP3_X$= (if $BYP3_x.WE_Y$) then $S_Y$, else $S3_x$

Namely, bypass stage 2 or 3 of pipeline in PE 20 before the result is written back to the Register File 50 to circumvent any delay. This consumption of a previous result value of an operand as the value of the operand in a new instruction before it has been stored, is a fairly common construct in RISC processor architecture.

Looking at the different components in greater detail, the Register File 50 has the following characteristics:
• Byte addressable
• Supports 8 or 16 bit reads/writes

◦ 8-bit data is read or written using the lower 8 bits of the data bus (SDT 18)
◦ 16-bit data accesses must be aligned to even addresses

• Data size is signalled by $DS_X$ signals

| ◦ $DS_X$ | 0 | 1 |
|---|---|---|
| ◦ Size | 16-bit | 8-bit |

The Register File 50 also provides internal bypass paths (not shown) to handle read/write collisions. These bypass paths, which also minimise delay, are buried inside Register File 50 but would have had the label 'BYP1' if they had been shown.

The 16-bit communications multiplexer 66 is at the heart of the communications circuit 52. The communications multiplexer 66 is a digital circuit that can shift a 16-bit data word by a specified number of bits in one clock cycle. It can be implemented as a sequence of multiplexers (MUX), and in such an implementation the output of one MUX is connected to the input of the next MUX in a way that depends on the shift distance. The Communications Multiplexer 66 can fetch operands and data from any active or inactive PE as all connected PEs register files are accessible.

In the present embodiment, a recirculation path 71 is provided around the communications multiplexer 66 for operand A. The 16-bit recirculation path 71 enables the indirect mode of operation of the communications circuit 52 to operate, namely the communications multiplexer 66 repeats the fetch operation to move the required data from the original location to an intermediate location closer to the PU 14 in which the current PE 20 is located. The recirculation path 71 is repeatedly used until the desired data which was originally stored in a register file 50 of a remote PU 14 has been fetched to the current PE 20. This data can then be used for the current operand A. In order to facilitate this remote access, remote PE offsets (not shown) may be stored in registers in the register file 50.

Similarly, a lower recirculation path 73 is provided for recirculating the value of the B operand. However, the purpose of the 16-bit lower recirculation path is to assist in the operation of Booth's algorithm which is implemented within the ALU 56. The lower recirculation path 71 includes an LSR2 register 75 which acts to shift the 16-bit B operand by two places to change the MSB of a three bit portion to the Least Significant Bit of the three-bit portion in line with an implementation of Booth's algorithm (see reference below to co-pending application regarding Booth's algorithm).

Referring now to Figure 6, general structure of the 16-bit ALU 56 is now described. The ALU 56 comprises a local SIMD Booths Algorithm Circuit 80, a barrel shifter 81, an arithmetic unit 82 for carrying out all logical ALU operations, a set of results registers 83 for storing the current status of the ALU and the results of the ALU operations. The ALU 56 also comprises a controller 85, which interacts with the results stored in the results registers 83 and controls an output control circuit 86. The output control circuit 86 delivers some of the results registers' output back as a result 87 to the Register File 50 or back up to the SIMD controller (not shown) which is generating the instruction stream 16. This is all carried out under the control of the controller 85.

The local SIMD Booths Algorithm Circuit 80 works in conjunction with the 32-bit barrel shifter 81 to receive the two input 16-bit operands A and B 58, 60 and optionally carries out a multiplication operation on the operands using the well known Booth's Algorithm. For a better understanding of what this involves the reader is referred to our co-pending patent application WO 2008/120001 (the contents of which are incorporated herein by reference). As has been mentioned previously, part of the operation of the Booth's algorithm is carried out in the PE 20 by the lower recirculation path 73 and the LSR2 register 75.

As can be seen, the operands A and B 58, 60 can be fed to the arithmetic unit 82 without passing through the SIMD Booth's Algorithm circuit 80. In this case, operand A 58 passes through the Barrel Shifter 81 and operand B passes directly into the arithmetic unit 82. The key advantage of this architecture is that it is possible to implement a shift on operand A 58 before performing the arithmetic operation on it. This is a new architecture within the PE 20 which is very powerful and enables greater efficiency in that less clock cycles are need to perform, for example, a shift and add operation than was previously possible. The operation of a shift and then a logical operation is implemented as a single instruction in a single clock cycle. Furthermore, a high efficiency of the ALU architecture is achieved by using a single barrel shifter 81 for both the Booth's algorithm implementation and the new shift and logical operation implementation.

The output of the ALU operations carried out by the arithmetic unit 82 are stored in some of the results registers 83. Furthermore, other results registers 83 are provided as will be described with respect to Figure 7, which indicate the status of the ALU operation and which also provide the results of a conditional update enable signal. The results registers 83 are coupled to the controller 85 which operates under control of the instructions 84 from the instruction stream 16.

The instructions 84 of the instruction stream 16 also control the operation of the SIMD Booth's Algorithm circuit 80 and the 16-bit arithmetic unit 82.

The controller 85 operates with the output control circuit 86 to determine how the data in the results registers 83 are to be output, namely back to the Register files 50 as result 87 and/or back to the SIMD controller (not shown) which generates the instruction stream 16.

Referring now to Figure 7, the structure of the ALU 56 is now described in greater detail. The Booth's Algorithm Circuit 80 is implemented primarily by means of an Add/Shift Control Circuit 90 and a Shift Circuit 92. Operand A 58 is shifted by the Shift Circuit 92 by an amount determined by the operand B 60 which is fed to the Add/Shift Control Circuit 90. The detailed operation need not be described further as it will be apparent to the skilled addressee from knowledge of Booth's algorithm implementation as has been described previously in co-pending application WO 2008/120001 and common general knowledge. However, it is to be appreciated that Booth's algorithm for multiplication can be implemented differently on each PE 20.

As has been mentioned previously, the Shift circuit 92 provides the ability when coupled to the Arithmetic unit 82 to provide a shift and operation as a single operation. This increases efficiency of operation as less clock cycles are required to carry out such logical operations on operands. Thus optional operand modification logic is provided to implement a pre-complement and/or a pre-shift operation.

Two main arithmetic operation processing circuits are provided, one purely for addition (addition module 94) which generates the 16-bit Low byte $R_L$ of the operation Result and one for general logical operations (OP module 96) which generates the 16-bit High byte $R_H$ of the operation Result. These 16-bit result bytes are stored in results registers $Y_H$ 98 and $Y_L$ 99 respectively which collectively make up a 32-bit results register Y. The 32-bit results register stores the output from the ALU 56. This register which forms part of the results registers 83, is addressable as a whole (Y) or as two individual 16-bit registers ($Y_H$ and $Y_L$) 99, 98.

A 4-bit tag register 100 is also provided within the ALU 56 as part of the results registers 83. The tag register 100 can be loaded with the bottom 4 bits of the operation result $R_H$ and this can be fed back to an update control circuit 104 which is part of the controller 85. The tag value is compared in the update control circuit 104 with the value of a TV (Tag Value) instruction. If a match is found a conditional update enable signal can be asserted. The TV instruction is 8 bits with 4 bits providing the data for comparison together with a 4 bit mask to enable a selected bit to be compared.

This Tag value instruction (TV), the update control circuit 104 and the tag register 100 are configured to enable the PE 20 to support a limited searching function, in that patterns of bits can be searched for and used to make conditional enablement of functions within the ALU 56. This is an alternative to the prior art technique of providing an associated memory (such as a Content Addressable Memory (CAM) such as that described in our co-pending international application WO 02/43068).

Also a single bit flag register 102 is provided for conditionally storing the selected status output from the ALU 56 and for conditionally indicating the status of the PE 20. The output of the Flag register 102 provides the MR (Match Result) signal back to the SIMD controller. The A 16-bit ALU 56, with carry and the status signals negative, zero, less and greater.

The ALU 56 also includes a set of flags module 106 which works with the update control circuit 104. The update control circuit 104 generates enable signals for each of the results register 98, 99, the tags register 100, the bit flag register 102, the addition module 94 and the OP module 96. Also the $E_Y$ signal is generated by the update control circuit 104. These signals act as the output control circuit 86 and $E_Y$ can be conditional on a search result (using the Tag Register 100) or set to be unconditional by the instructions 84. The $E_Y$ signal is indicative of whether a PU is indicative of a PU that is active.

The set of flags module 106 simply generates and maintains the flags which indicate the status of specific logical events and this module 106 feeds its output to the single bit flag register 102. More specifically, the status signal flags: negative (N), zero (Z), less (L) and greater (G) are all provided.

The 32-bit results register Y is also conditionally output back to the SIMD controller as $Y_{SRD}$ which is the Y value as a Scalar Read Data. Both the $Y_{SRD}$ and the MR signals are passed through a summing tree network (not shown) before they get to the SIMD controller. The advantage of this is that a summing operation on the output of all of the PE results $Y_{SRD}$ is carried out automatically and this $Y_{SUM}$ can be fed back into a chosen PE for use in calculation (as is shown in Figure 7). Furthermore, the MR value (one bit) indicates whether the PE 20 is active or not and the sum of these MR signals from each of the 16 PEs in a PU provides a vector showing which PEs 20 have a result.

The operations of Add/Shift Control Circuit 90, Update Control Circuit 104 and the Flags Module 106 controlled to some degree by data values taken from or decoded from the instruction stream 16. A list of all such values taken from the Instruction stream are set out below:

$EN_{pe}$ = Enable processing element
$SUB_{pe}$ = Previous Scalar Value
ASM = Add Subtract Mode (4-bit)
SSD = Shift Distance (6-bit)
$S_A$ = Select operand A
$S_B$ = Select operand B
$S/U_A$ = Signed / Unsigned value for operand A
$S/U_R$ = Signed / Unsigned value for result R
RE = Round Enable
CLZ = Count Leading Zeros
$S_C$ = Select Carry
$S_F$ = Select Flag
$S_R$ = Select Results Register
$U_T$ = Update Tags

$U_F$ = Update Flags
UM= Update Mode
$U_L$ = Update Low
$U_H$ = Update High
MRM = Match Reply Modify (conditionally invert the Match value)
TV = Tag Vector (8-bit)
$Z_B$ = Select operand B to be zero

The ALU 56 as described above supports the following operations:

* 16-bit add, subtract, and add/subtract (v-v, v-s, or s-v)

  ◦ one vector operand may be arithmetically or logically shifted left or right by up to 16 bits

    ▪ the shift distance is the same for all PEs 20

  ◦ the carry/borrow output from the preceding clock cycle may be used to extend the operation to 32 bits
  ◦ the add/subtract operation is v-v only and is selected on a per-PE basis

* 16-bit add absolute value (v-v or v-s)

  ◦ the first operand may be arithmetically or logically shifted left or right by up to 16 bits

    ▪ the shift distance is the same for all PEs 20
    ▪ the shift occurs prior to taking the absolute value

* 16-bit bitwise-AND, bitwise-OR, and bitwise-XOR (v-v or v-s)

  ◦ one vector operand may be arithmetically or logically shifted left or right by up to 16 bits

    ▪ the shift distance is the same for all PEs 20

  ◦ either or both operands may be complemented (after shifting)

* 16-bit or 32-bit arithmetic or logical shift (v-v or v-s)

  ◦ shift left by up to 31 bits or right by up to 32 bits
  ◦ the result may be negated
  ◦ for a 32-bit shift the input must be pre-loaded into the accumulator

* 16-bit by 16-bit signed or unsigned multiply and multiply-accumulate (v-v or v-s)

  ◦ takes 8 clock cycles (9 cycles if the multiplier is unsigned)

    ▪ takes 1 additional clock cycle if all 32 bits of the result are written back to the Register File
    ▪ can early-terminate if the multiplier is known to occupy less than 16 bits

* 16-bit add, subtract, and add/subtract into 32-bit accumulator (v-v)

  ◦ the 16-bit input may be shifted or rotated left by up to 31 bits

    ▪ the shift distance is the same for all PEs

* 16-bit count leading zeroes

  ◦ this may be performed instead of a shift on one vector operand of a 16-bit arithmetic or logical operation

    ▪ when combined with an arithmetic operation, the maximum clock frequency may be reduced

* 32-bit sum over multiple PEs 20

  ◦ using external adder tree connected to ALU scalar read data output

    ▪ disabled PEs 20 are excluded from sum
    ▪ sums over PEs 20 in same processing unit

* Right-shifted values may be rounded to the nearest integer

  ◦ not supported when a shift is applied to the first operand of a subtract or add/subtract operation
  ◦ not supported when a shift is applied to one operand of a logical operation

In the above v-v = vector to vector, v-s = vector to scalar and s-v =scalar to vector.
Therefore each PE 20 is configured to implement limited associative operations but without the use of CAMs. Rather, a specific part of the ALU 56 using a tag register 100 and a Tag Value instruction TV is utilised and a conditional update enabling flag is created.

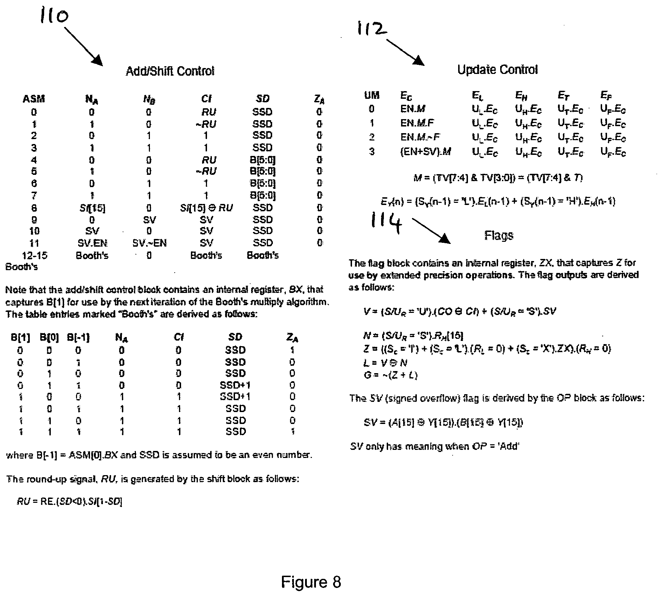

Figure 8 shows a set of truth tables and equations 110, 112 and 114 respectively for the Add/Shift Control Circuit 90, for the Update Control Circuit 104 and for the set of Flags 106. Each of these give specific details of the behaviour of these circuits with given input values. Further explanation is not required as the skilled addressee is very capable of reading such state tables for implementation purposes.

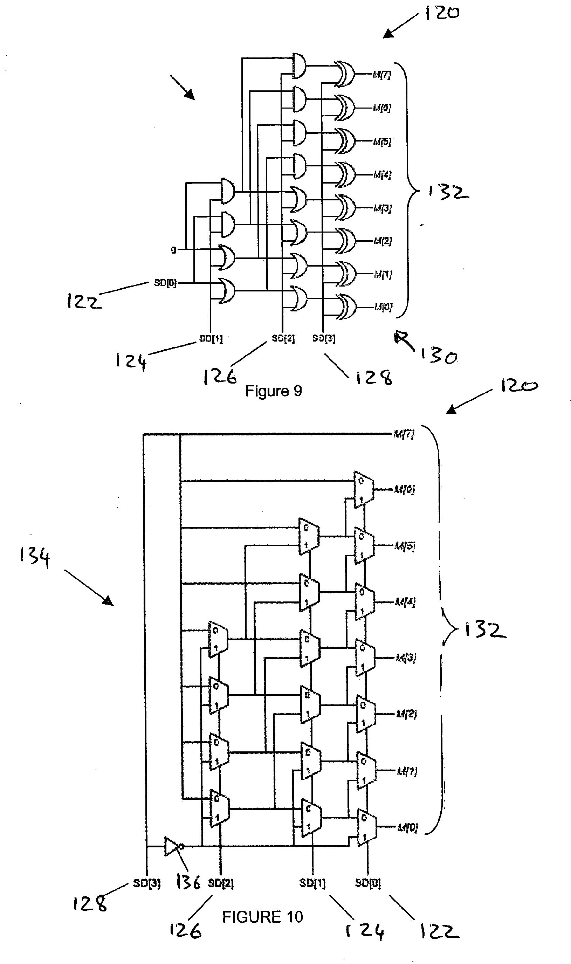

There are several different ways in which the barrel shifter 92 can be implemented and these are described with reference to Figures 9, 10 and 11 below. Any of these can be used in the present embodiment.

For the purposes of making the understanding of the operation of 32-bit barrel shifter 92 easier, an example of 8-bit barrel shifter is described hereinafter. Once this is understood, scaling this up to 32-bits of the present embodiment will be relatively simple to the skilled addressee. In this regard, the complexity scales as $W.\log_2 W$ where W is the bit width. Internal signals may be active-high or active-low. In the present embodiment, signals alternate between active-high and active-low in successive stages which allows the use of NAND, NOR and inverting MUX cells which act to reduce the surface area of the microprocessor chip consumed for implementation of the barrel shifter 92.

The architecture of the barrel shifter 92 is implemented as a barrel rotator followed by a masking operation. Two embodiments of possible mask generation are shown in Figures 9 and 10. Figure 9 shows one embodiment which is suited to a standard logic cell implementation and Figure 10 shows an embodiment which requires less logic calls if passive MUXs cells are available.

More specifically referring in detail to Figure 9, the masking operation circuit 120 has four variable inputs SD[0] 122, SD[1] 124, SD[2] 126, and SD[3] 128. These inputs feed into an array of AND, OR and NAND logic gates 130 as shown in Figure 9 and result in output of Masking Signals M[0], M[1], M[2], M[3], M[4], M[5], M[6], and M[7] 132. Similarly in Figure 10, the same input values 122, 124, 126, 128 are used and the same masking output values 132 are obtained for a circuit comprising an interconnected set of inverting MUX cells 134 with a simple NOT gate 136.

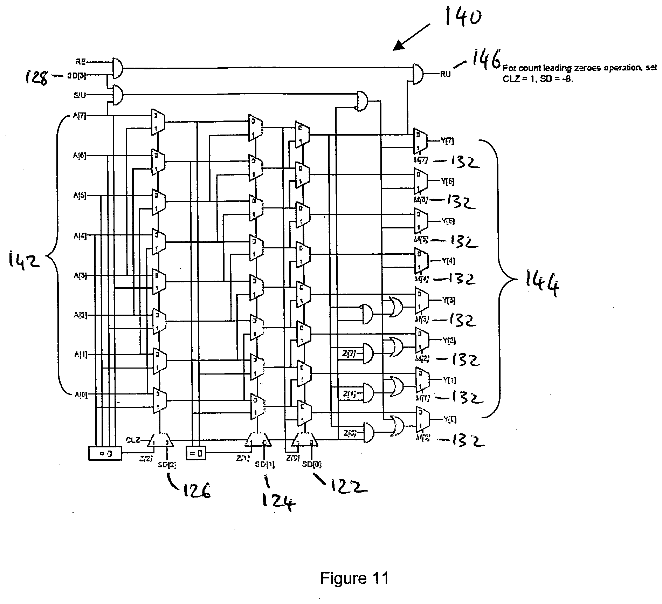

Figure 11 is a logic gate circuit diagram showing a barrel rotator 140 of the barrel shifter 66 with outputs modifiable by the outputs of the masking operation circuit 120. The barrel rotator circuit 140 also includes support for a counting leading zeros (CLZ) operation. The inputs to the rotator 140 include the four variable inputs SD[0] 122, SD[1] 124, SD[2] 126, and SD[3] 128, together with the 8-bit data input word A[0]-A[7] 142. Other inputs include variables RE, S/U, CLZ, and the outputs of the Masking operation circuit M[0] to M[7] 132. The outputs of the rotator and masking stages result in a signals Y[0], Y[1], Y[2], Y[3], Y[4], Y[5], Y[6], and Y[7] 144 and RU 146.

The flexibility of this aspect of the present embodiment, as seen in for example the feature that data can be moved from any PE 20 to any other PE 20 within the same PU 14 in a single clock cycle, allows for faster data transfer.

The present embodiment enables standard interfaces to be used, which permits 100% conformance with existing standards, for example, USB and PCI interfaces.

Having described particular preferred embodiments of the present invention, it is to be appreciated that the embodiments in question are exemplary only and that the scope of the invention is as set forth in the appended claims.

## Claims

1. A parallel processor (10) comprising:

   a plurality of processing elements (20) connected in a string and grouped into a plurality of processing units (14), such that all of the processing elements (20) within each processing unit (14) are connected in a string configuration;
   wherein each processing unit (14) comprises a plurality of processing elements (20) completely interconnected with each other, each processing element having a direct individual interconnection (32) with each of the other processing elements within the respective processing unit (14), the direct individual interconnections (32) enabling data transfer between any two processing elements (20) within a processing unit (14) to be effected in a single clock cycle and enabling all processing elements (20) to fetch data concurrently from any other processing element (20) within the same processing unit (14);
   wherein each processing unit (14) comprises an Arithmetic Logic Unit (ALU) (56) having a limited search function for a desired match pattern from a subset of bits of an ALU result and the function is arranged to conditionally enable an other function upon a match condition being achieved; and
   wherein the search function is arranged to receive a global instruction indicating the desired match pattern.

2. A parallel processor (10) according to Claim 1, wherein each processing unit (14) further comprises an isolation multiplexer (36) for selectably connecting the processing unit (14) with an adjacent processing unit (14).

3. A parallel processor (10) according to Claim 2, wherein the processor comprises a SIMD parallel processor and an instruction stream of the SIMD parallel processor determines the connections between the processing units (14) by controlling the isolation multiplier (36).

4. A parallel processor (10) according to any preceding claim, wherein each processing element (20) has a unique numerical identity which can be specified within a processing instruction to enable or disable the processing element (20) from participating in the currently executed set of instructions.

**5.** A parallel processor (10) according to Claim 4, wherein each processing element (20) is operatively selectable under software control via an instruction stream to that processing element, such software control disabling the processing element (20) from taking part in a present concurrent processing operation in use and enabling the same processing element (20) to take part in a following concurrent processing operation.

**6.** A parallel processor (10) according to any preceding claim, wherein each processing unit (14) has a unique numerical identity which can be specified within a processing instruction to enable or disable the processing unit (14) from participating in the currently executed set of instructions.

**7.** A parallel processor (10) according to any preceding claim, wherein each processing element (20) comprises a communications module (52) for communicating directly with other processing elements within the same processing unit (14).

**8.** A parallel processor (10) according to Claim 7, wherein the communications module (52) comprises a communications multiplexer circuit (66).

**9.** A parallel processor (10) according to Claim 8, wherein the communications multiplexer circuit (66) is provided in each processing element (20) of a processing unit (14) and provides a connection to each of the other elements within the processing unit (14).

**10.** A parallel processor (10) according to any preceding claim, wherein each processing element (20) comprises a set of data registers (50) acting as a primary data store.

**11.** A parallel processor (10) according to Claim 10, wherein the set of data registers (50) are coupled to a shared secondary data store remote from the set of data registers (50) via a secondary data transfer interface (18).

**12.** A parallel processor (10) according to Claim 10 or 11, wherein the ALU (56) is configured to implement a Booth's Complement multiplication function.

**13.** A High-Definition Real-Time Video data encoder/decoder comprising a parallel processor (10) according to any preceding claim.

**Patentansprüche**

**1.** Parallelprozessor (10), umfassend:

eine Mehrzahl von Verarbeitungselementen (20), die in einem Strang verbunden und zu einer Mehrzahl von Verarbeitungseinheiten (14) gruppiert sind, derart dass alle der Verarbeitungselemente (20) innerhalb jeder Verarbeitungseinheit (14) in einer Strangkonfiguration verbunden sind;
wobei jede Verarbeitungseinheit (14) eine Mehrzahl von Verarbeitungselementen (20) umfasst, die vollständig miteinander verbunden sind, wobei jedes Verarbeitungselement eine direkte individuelle Verbindung (32) mit jedem der anderen Verarbeitungselemente innerhalb der jeweiligen Verarbeitungseinheit (14) aufweist, wobei die direkten individuellen Verbindungen (32) ermöglichen, dass Datenübertragung zwischen beliebigen zwei Verarbeitungselementen (20) innerhalb einer Verarbeitungseinheit (14) in einem einzigen Taktzyklus durchgeführt wird, und ermöglichen, dass alle Verarbeitungselemente (20) Daten gleichzeitig von jedem anderen Verarbeitungselement (20) innerhalb der gleichen Verarbeitungseinheit (14) abrufen;
wobei jede Verarbeitungseinheit (14) eine arithmetische Logikeinheit (ALU) (56) mit einer beschränkten Suchfunktion nach einem gewünschten Übereinstimmungsmuster aus einem Teilsatz von Bits eines ALU-Ergebnisses umfasst, und die Funktion so ausgelegt ist, dass sie eine andere Funktion bei Erreichen eines Übereinstimmungszustands bedingt aktiviert;
wobei die Suchfunktion so ausgelegt ist, dass sie eine allgemeine Anweisung empfängt, die das gewünschte Übereinstimmungsmuster angibt.

**2.** Parallelprozessor (10) nach Anspruch 1, wobei jede Verarbeitungseinheit (14) ferner einen Isolationsmultiplexer (36) zum selektiven Verbinden der Verarbeitungseinheit (14) mit einer benachbarten Verarbeitungseinheit (14) umfasst.

**3.** Parallelprozessor (10) nach Anspruch 2, wobei der Prozessor einen SIMD-Parallelprozessor umfasst, und ein Anweisungsstrom des SIMD-Parallelprozessors die Verbindungen zwischen den Verarbeitungseinheiten (14) durch Steuern des Isolationsmultiplexers (36) bestimmt.

**4.** Parallelprozessor (10) nach einem der vorhergehenden Ansprüche, wobei jedes Verarbeitungselement (20) eine eindeutige numerische Identität aufweist, die innerhalb einer Verarbeitungsanweisung angegeben sein kann, um das Verarbeitungselement (20) zu befähigen oder daran zu hindern, am gegenwärtig ausgeführten Satz von Anweisungen teilzunehmen.

5. Parallelprozessor (10) nach Anspruch 4, wobei jedes Verarbeitungselement (20) unter Softwarekontrolle über einen Anweisungsstrom an dieses Verarbeitungselement funktionell ausgewählt werden kann, wobei solch eine Softwarekontrolle das Verarbeitungselement (20) daran hindert, an einem aktuellen gleichzeitigen Verarbeitungsvorgang teilzunehmen, und das gleiche Verarbeitungselement (20) befähigt, an einem folgenden gleichzeitigen Verarbeitungsvorgang teilzunehmen.

6. Parallelprozessor (10) nach einem der vorhergehenden Ansprüche, wobei jede Verarbeitungseinheit (14) eine eindeutige numerische Identität aufweist, die innerhalb einer Verarbeitungsanweisung angegeben sein kann, um die Verarbeitungseinheit (14) zu befähigen oder daran zu hindern, am gegenwärtig ausgeführten Satz von Anweisungen teilzunehmen.

7. Parallelprozessor (10) nach einem der vorhergehenden Ansprüche, wobei jedes Verarbeitungselement (20) ein Kommunikationsmodul (52) zum direkten Kommunizieren mit anderen Verarbeitungselementen innerhalb der gleichen Verarbeitungseinheit (14) umfasst.

8. Parallelprozessor (10) nach Anspruch 7, wobei das Kommunikationsmodul (52) eine Kommunikationsmultiplexerschaltung (66) umfasst.

9. Parallelprozessor (10) nach Anspruch 8, wobei die Kommunikationsmultiplexerschaltung (66) in jedem Verarbeitungselement (20) einer Verarbeitungseinheit (14) vorgesehen ist und eine Verbindung mit jedem der anderen Elemente innerhalb der Verarbeitungseinheit (14) bereitstellt.

10. Parallelprozessor (10) nach einem der vorhergehenden Ansprüche, wobei jedes Verarbeitungselement (20) einen Satz von Datenregistern (50) umfasst, die als primärer Datenspeicher fungieren.

11. Parallelprozessor (10) nach Anspruch 10, wobei der Satz von Datenregistern (50) über eine sekundäre Datenübertragungsschnittstelle (18) mit einem gemeinsam benutzten sekundären Datenspeicher gekoppelt ist, der vom Satz von Datenregistern (50) entfernt ist.

12. Parallelprozessor (10) nach Anspruch 10 oder 11, wobei die ALU (56) so konfiguriert ist, dass sie eine Komplementmultiplikationsfunktion nach Booth implementiert.

13. Daten-Encoder/-Decoder für hochauflösendes Echtzeitvideo, umfassend einen Parallelprozessor (10) nach einem der vorhergehenden Ansprüche.

**Revendications**

1. Processeur parallèle (10) comprenant :

une pluralité d'éléments de traitement (20) reliés dans une chaîne et regroupés dans une pluralité d'unités de traitement (14), de sorte que tous les éléments de traitement (20) à l'intérieur de chaque unité de traitement (14) soient reliés dans une configuration en chaîne ;
dans lequel chaque unité de traitement (14) comprend une pluralité d'éléments de traitement (20) complètement interconnectés l'un avec l'autre, chaque élément de traitement ayant une interconnexion individuelle directe (32) avec chacun des autres éléments de traitement à l'intérieur de l'unité de traitement (14) respective, les interconnexions individuelles directes (32) permettant qu'un transfert de données entre deux éléments de traitement (20) quelconques à l'intérieur d'une unité de traitement (14) soit effectué dans un cycle d'horloge unique et permettant à tous les éléments de traitement (20) de récupérer des données simultanément à partir de n'importe quel autre élément de traitement (20) à l'intérieur de la même unité de traitement (14) ;
dans lequel chaque unité de traitement (14) comprend une unité logique arithmétique, ALU, (56) comportant une fonction de recherche limitée pour un motif de correspondance souhaité à partir d'un sous-ensemble de bits d'un résultat ALU et la fonction est agencée pour permettre conditionnellement une autre fonction lorsqu'une condition de correspondance est remplie ; et
dans lequel la fonction de recherche est agencée pour recevoir une instruction globale indiquant le motif de correspondance souhaité.

2. Processeur parallèle (10) selon la revendication 1, dans lequel chaque unité de traitement (14) comprend en outre un multiplexeur d'isolation (36) pour relier, de manière sélectionnable, l'unité de traitement (14) à une unité de traitement adjacente (14).

3. Processeur parallèle (10) selon la revendication 2, dans lequel le processeur comprend un processeur parallèle SIMD et un flux d'instructions du processeur parallèle SIMD détermine les connexions entre les unités de traitement (14) en commandant le multiplicateur d'isolation (36).

4. Processeur parallèle (10) selon l'une quelconque des revendications précédentes, dans lequel chaque élément de traitement (20) comporte une identité numérique unique qui peut être spécifiée dans une instruction de traitement pour permettre à l'élément de traitement (20) de participer à l'ensemble d'instructions actuellement exécutées ou de le lui interdire.

5. Processeur parallèle (10) selon la revendication 4, dans lequel chaque élément de traitement (20) peut être sélectionné, de manière opérationnelle, par une commande logicielle par l'intermédiaire d'un flux d'instructions vers cet élément de traitement, ladite commande logicielle interdisant à l'élément de traitement (20) de participer à une opération de traitement simultané actuelle en utilisation et permettant à cet élément de traitement (20) de participer à une opération de traitement simultané suivante.

6. Processeur parallèle (10) selon l'une quelconque des revendications précédentes, dans lequel chaque unité de traitement (14) comporte une identité numérique unique qui peut être spécifiée dans une instruction de traitement pour permettre à l'unité de traitement (14) de participer à l'ensemble d'instructions actuellement exécutées ou de le lui interdire.

7. Processeur parallèle (10) selon l'une quelconque des revendications précédentes, dans lequel chaque élément de traitement (20) comprend un module de communication (52) pour communiquer directement avec d'autres éléments de traitement dans la même unité de traitement (14).

8. Processeur parallèle (10) selon la revendication 7, dans lequel le module de communication (52) comprend un circuit multiplexeur de communication (66).

9. Processeur parallèle (10) selon la revendication 8, dans lequel le circuit multiplexeur de communication (66) est prévu dans chaque élément de traitement (20) d'une unité de traitement (14) et il fournit une connexion à chacun des autres éléments dans l'unité de traitement (14).

10. Processeur parallèle (10) selon l'une quelconque des revendications précédentes, dans lequel chaque élément de traitement (20) comprend un ensemble de registres de données (50) servant de mémoire de données principale.

11. Processeur parallèle (10) selon la revendication 10, dans lequel l'ensemble de registres de données (50) est couplé à une mémoire de données secondaire partagée à distance de l'ensemble de registres de données (50) par l'intermédiaire d'une interface de transfert de données secondaire (18).

12. Processeur parallèle (10) selon la revendication 10 ou 11, dans lequel l'ALU (56) est configurée pour mettre en oeuvre une fonction de multiplication de complément de Booth.

13. Codeur/décodeur de données vidéo en temps réel de haute définition comprenant un processeur parallèle (10) selon l'une quelconque des revendications précédentes.

Single Instruction Multiple Data (SIMD) instruction stream

Secondary   Data   Transfer   Pathways

FIGURE 1

14

Figure 2

Figure 3

Figure 4

Red text indicates values taken from or decoded from the instruction stream (suitably pipelined)

Figure 5

FIGURE 6

Figure 7

110

**Add/Shift Control**

| ASM | $N_A$ | $N_B$ | CI | SD | $Z_A$ |
|---|---|---|---|---|---|
| 0 | 0 | 0 | RU | SSD | 0 |
| 1 | 1 | 0 | ~RU | SSD | 0 |
| 2 | 0 | 1 | 1 | SSD | 0 |
| 3 | 1 | 1 | 1 | SSD | 0 |
| 4 | 0 | 0 | RU | B[5:0] | 0 |
| 5 | 1 | 0 | ~RU | B[5:0] | 0 |
| 6 | 0 | 1 | 1 | B[5:0] | 0 |
| 7 | 1 | 1 | 1 | B[5:0] | 0 |
| 8 | SI[15] | 0 | SI[15] $\oplus$ RU | SSD | 0 |
| 9 | 0 | SV | SV | SSD | 0 |
| 10 | SV | 0 | SV | SSD | 0 |
| 11 | SV.EN | SV.~EN | SV | SSD | 0 |
| 12-15 | Booth's | 0 | Booth's | Booth's | |
| Booth's | | | | | |

Note that the add/shift control block contains an internal register, BX, that captures B[1] for use by the next iteration of the Booth's multiply algorithm. The table entries marked "Booth's" are derived as follows:

| B[1] | B[0] | B[-1] | $N_A$ | CI | SD | $Z_A$ |
|---|---|---|---|---|---|---|
| 0 | 0 | 0 | 0 | 0 | SSD | 1 |
| 0 | 0 | 1 | 0 | 0 | SSD | 0 |
| 0 | 1 | 0 | 0 | 0 | SSD | 0 |
| 0 | 1 | 1 | 0 | 0 | SSD+1 | 0 |
| 1 | 0 | 0 | 1 | 1 | SSD+1 | 0 |
| 1 | 0 | 1 | 1 | 1 | SSD | 0 |
| 1 | 1 | 0 | 1 | 1 | SSD | 0 |
| 1 | 1 | 1 | 1 | 1 | SSD | 1 |

where B[-1] = ASM[0].BX and SSD is assumed to be an even number.

The round-up signal, RU, is generated by the shift block as follows:

$$RU = RE.(SD<0).SI[1-SD]$$

112

**Update Control**

| UM | $E_C$ | $E_L$ | $E_N$ | $E_T$ | $E_F$ |
|---|---|---|---|---|---|
| 0 | EN.M | $U_L.E_C$ | $U_H.E_C$ | $U_T.E_C$ | $U_F.E_C$ |
| 1 | EN.M.F | $U_L.E_C$ | $U_H.E_C$ | $U_T.E_C$ | $U_F.E_C$ |
| 2 | EN.M.~F | $U_L.E_C$ | $U_H.E_C$ | $U_T.E_C$ | $U_F.E_C$ |
| 3 | (EN+SV).M | $U_L.E_C$ | $U_H.E_C$ | $U_T.E_C$ | $U_F.E_C$ |

$$M = (TV[7:4] \& TV[3:0]) = (TV[7:4] \& T)$$

$$E_N(n) = (S_Y(n-1) = 'L').E_L(n-1) + (S_Y(n-1) = 'H').E_H(n-1)$$

114

**Flags**

The flag block contains an internal register, ZX, that captures Z for use by extended precision operations. The flag outputs are derived as follows:

$$V = (S/U_R = 'U').(CO \oplus CI) + (S/U_R = 'S').SV$$

$$N = (S/U_R = 'S').R_H[15]$$
$$Z = ((S_C = 'T') + (S_C = 'L').(R_L = 0) + (S_C = 'X').ZX).(R_H = 0)$$
$$L = V \oplus N$$
$$G = \sim(Z + L)$$

The SV (signed overflow) flag is derived by the OP block as follows:

$$SV = (A[15] \oplus Y[15]).(B[15] \oplus Y[15])$$

SV only has meaning when OP = 'Add'

Figure 8

18

Figure 9

FIGURE 10

Figure 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03054707 A
- US 5557734 A
- US 5163120 A
- US 6128720 A
- GB 0809189 A
- WO 2008120001 A
- WO 0243068 A